# EUROPÄISCHE PATENTSCHRIFT

(11) **EP 2 892 861 B1**
(45) Veröffentlichungstag und Bekanntmachung des Hinweises auf die Patenterteilung: **19.10.2016**
(21) Anmeldenummer: 13791897.5
(22) Anmeldetag: 05.09.2013
(51) Int. Cl.: C04B 7/43

(54) **VERFAHREN UND VORRICHTUNG ZUR ABSCHEIDUNG EINES FLÜCHTIGEN BESTANDTEILS**
PROCESS AND DEVICE FOR SEPARATING OFF AT LEAST ONE VOLATILE COMPONENT
PROCÉDÉ ET DISPOSITIF DE SÉPARATION D'UN CONSTITUANT VOLATIL

(30) Priorität: 05.09.2012 AT 503592012
(43) Veröffentlichungstag der Anmeldung: 15.07.2015
(73) Patentinhaber: Scheuch GmbH, 4971 Aurolzmünster (AT); W&P Zement GmbH, 9873 Klein St. Paul (AT); A TEC Holding GmbH, 9585 Gödersdorf (AT)
(72) Erfinder: LISBERGER, Manfred, A-4752 Riedau (AT); STEINWANDTER, Andreas, A-4020 Linz (AT); SCHWEI, Peter, A-9583 Faak am See (AT); FREIMANN, Wolfgang, A-8700 Leoben (AT)
(74) Vertreter: Sonn & Partner Patentanwälte
(86) Internationale Anmeldenummer: PCT/AT2013/050173
(87) Internationale Veröffentlichungsnummer: WO 2014/036585

(56) Entgegenhaltungen:
- EP-A1- 0 519 225
- JP-A- 2009 184 902
- JP-A- 2009 234 869
- US-A1- 2009 193 968

## Beschreibung

Die Erfindung betrifft ein Verfahren zur Abscheidung zumindest eines flüchtigen Bestandteils, beispielsweise Quecksilber, Thallium, organische Verbindungen, Schwefel- oder Stickstoffverbindungen, aus den Abgasen bei der Zementklinkerherstellung, wobei die Rohmaterialien für die Zementklinkerherstellung unter Wärmeaustausch mit den Abgasen durch einen Vorwärmer geleitet und anschließend in einem Drehrohrofen gebrannt werden, wobei durch die Aufwärmung der Rohmaterialien in dem Vorwärmer der in den Rohmaterialien gebundene flüchtige Bestandteil verdampft wird, welcher aus den Abgasen abgeschieden wird.

Weiters betrifft die Erfindung eine Vorrichtung zur Abscheidung zumindest eines flüchtigen Bestandteils, beispielsweise Quecksilber, Thallium, organische Verbindungen, Schwefel- oder Stickstoffverbindungen, aus den Abgasen bei der Zementklinkerherstellung, mit einem Vorwärmer, einer Aufgabe für die zur Zementklinkerherstellung benötigten Rohmaterialien im Gegenstromprinzip gegen die Richtung der Abgase in den Vorwärmer, und mit einem Drehrohrofen zum Brennen der Rohmaterialien.

Ein solches Verfahren und eine solche Vorrichtung sind aus der US 2009/0193968 A1 bekannt.

Bei der Zementklinkerherstellung werden verschiedene Rohmaterialien, wie zum Beispiel Kalkstein und Ton, in einem Drehrohrofen gebrannt. In vielen der eingesetzten Rohmaterialien sind flüchtige Bestandteile, wie Quecksilber, Thallium, organische Verbindungen, Schwefel- oder Stickstoffverbindungen enthalten, welche beim Aufheizen in der Vorwärmstufe verdampfen und bei der Abkühlung der Abgase wieder am Staub gebunden werden. So wird zum Beispiel der Großteil des Quecksilbers mit dem in der Rohmühle erzeugten und dem in der Filterstufe abgeschiedenen Staub wieder dem Zementklinkerherstellungsprozess zugeführt, nur ein kleiner Anteil entweicht mit dem Abgas in die Atmosphäre. Die Quecksilberfracht wird dabei vorwiegend über die Rohmaterialien in den Prozess eingetragen, ein geringer Anteil des Quecksilbereintrags kann auch über die Brennstoffe erfolgen.

Die vorliegende Patentanmeldung ist hauptsächlich auf die Zementklinkerherstellung gerichtet, kann aber auch bei anderen thermischen Produktionsverfahren zum Einsatz kommen, bei denen ein ausgeprägtes Kreislaufverhalten einiger Abgasschadstoffe beobachtet wird.

Grundsätzlich besteht die Möglichkeit, das in den Rohmaterialien vorkommende Quecksilber bereits vor der Verwendung für die Zementklinkerherstellung zu entfernen bzw. zu reduzieren. Dies erfolgt beispielsweise durch eine Aufbereitung der Rohmaterialien mit heißen Gasen, wodurch das enthaltene Quecksilber zumindest teilweise verdampft und anschließend in konzentrierter Form abgeschieden werden kann. Durch das erforderliche Aufwärmen der Rohmaterialien ist jedoch relativ viel Energie erforderlich, was die Gesamtkosten erhöht und das Verfahren bei hohen Materialdurchsätzen unwirtschaftlich macht.

Auch Lösungen, bei welchen der gesamte Abgasstrom des Drehrohrofens bei der Zementklinkerherstellung mit Hilfe bestimmter Abgasreinigungsverfahren zur Quecksilberabscheidung, wie zum Beispiel Aktivkohlefilter, gereinigt wird, sind aufgrund der großen Luftmengen und somit erforderlichen Anlagengröße wirtschaftlich nicht akzeptabel.

Ein weiteres Verfahren zur Abscheidung von Quecksilber aus den Abgasen eines Zementherstellungsprozesses ist aus der EP 2 437 866 A1 bekannt, wobei ein vom Vorwärmer getrennter Austreibungsreaktor vorgesehen wird. Das Quecksilber wird an einem Sorbens, insbesondere Staub, gebunden und dem mit einem Trägergas betriebenen Austreibungsreaktor zugeführt, wo das Sorbens anschließend auf Temperaturen von mehr als 250°C erhitzt wird, so dass das Quecksilber aus dem Sorbens ausgetrieben und in die Gasphase überführt wird. Das mit Quecksilber angereicherte Gas des Austreibungsreaktors wird anschließend in einer Vor-Entstaubungseinrichtung entstaubt. Im Austreibungsreaktor wird nur ein Teilstrom des so angereicherten und entstaubten Gases bei hohen Temperaturen abgezogen und in einer nachfolgenden Sorptionsstufe gereinigt, während der verbleibende Teilstrom in einem Wärmeübertragungssystem auf die für die Austreibung des Quecksilbers im Austreibungsreaktor erforderliche Temperatur gebracht wird und als Trägergas dem Austreibungsreaktor erneut zugeführt wird. Im Wärmeübertragungssystem des Austreibungsreaktors kann ein heißer Abgasstrom aus dem Zementherstellungsprozess mit dem teilweise umlaufenden Gasstrom gemischt werden.

Nachteilig an der Anordnung des Austreibungsreaktors ist jedoch die Tatsache, dass der in der Vor-Entstaubungseinrichtung anfallende Staub einem Silo zugeführt wird, bevor der Staub in den Vorwärmer rückgeführt wird. Demnach ist eine neuerliche Aufheizung des Staubs im Vorwärmer erforderlich, womit nachteiligerweise ein hoher Energieaufwand einhergeht.

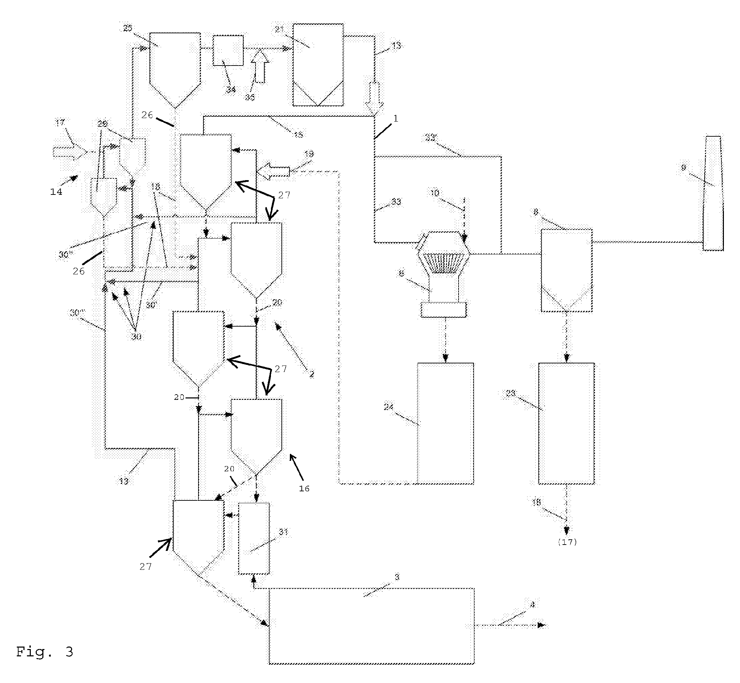

In der WO 2007/128619 A1 ist eine andersartige Vorrichtung zur Herstellung von Zementklinker gezeigt, bei welcher ein Vorwärmer mit vier Zyklonstufen und ein Kalzinator mit einem Zyklon vorgesehen sind. In der Ausführung gemäß Fig. 3 ist ein zweiter Kalzinator vorgesehen, welcher mit Zyklonstufen verbunden ist.

DE 10 2008 023 899 A1 offenbart eine andersartige Anlage mit einem ersten Vorwärmer zum Vorwärmen einer kalkreichen Materialkomponente und einem zweiten Vorwärmer zum Vorwärmen einer kalkarmen Materialkomponente, einem Kalzinator und einem Ofen zum Brennen des kalzinierten Rohmaterials zu Zementklinker. Der erste Vorwärmer steht mit einer Abgasleitung des Kalzinators in Verbindung, während der zweite Vorwärmer an eine Abgasleitung des Ofens angeschlossen ist.

Die EP 0 845 443 A1 befasst sich mit einem andersartigen Verfahren zur Entfernung von Schwefeldioxid aus Abgasen einer Ofenanlage, bei welchem das einem Vorwärmer aufzugebende Rohmehl aus einer Rohmaterial-Mahlanlage zugeführt und abgekühlter Zementklinker in einer Zementmahlanlage gemahlen wird. Dabei wird wenigstens ein Teilstrom der Abgase aus dem Rohmehl-Vorwärmer durch die Zementmahlanlage hindurchgeleitet und dabei Schwefeldioxid aus den Abgasen von den Zementpartikeln absorbiert.

Aufgabe der vorliegenden Erfindung ist daher die Schaffung eines oben genannten Verfahrens und einer oben genannten Vorrichtung zur Abscheidung von Quecksilber aus den Abgasen bei der Zementklinkerherstellung, durch welche eine ausreichend hohe Reduktion der Quecksilber-Emissionen ermöglicht wird, wobei möglichst wenig zusätzliche Energie und ein möglichst geringer zu reinigender Abgasvolumenstrom benötigt werden und somit der Betrieb und die Installation möglichst kostengünstig sein soll.

Diese Aufgabe wird bei dem Verfahren der eingangs angeführten Art dadurch gelöst, dass ein erster Rohmaterialstrom mit einer höheren Konzentration des flüchtigen Bestandteils in einen ersten Strang des Vorwärmers und ein zweiter Rohmaterialstrom mit einer niedrigeren Konzentration des flüchtigen Bestandteils in einen zweiten Strang des Vorwärmers aufgegeben werden, wobei der erste Strang des Vorwärmers mit einem ersten Teilstrom der Abgase des Drehrohrofens und der zweite Strang des Vorwärmers mit einem zweiten Teilstrom der Abgase des Drehrohrofens betrieben werden, wobei der flüchtige Bestandteil aus dem durch den ersten Strang des Vorwärmers geleiteten ersten Teilstrom der Abgase abgeschieden wird, wobei der durch Wärmeaustausch mit dem ersten Teilstrom der Abgase im ersten Strang des Vorwärmers auf eine Temperatur von zumindest 250°C erwärmte erste Rohmaterialstrom mit im Wesentlichen gleichbleibender Temperatur von zumindest 250°C über eine Verbindungsleitung zwischen dem ersten und zweiten Strang des Vorwärmers mit dem zweiten Rohmaterialstrom des zweiten Strangs des Vorwärmers zusammengeführt wird.

Erfindungsgemäß werden daher die Rohmaterialien mit der höheren Konzentration des flüchtigen Bestandteils in den ersten Strang des Vorwärmers und die Rohmaterialien mit der niedrigeren Konzentration des flüchtigen Bestandteils in den zweiten Strang des Vorwärmers aufgegeben. Zur Abscheidung des flüchtigen Bestandteils wird ausschließlich der erste Teilstrom der Abgase herangezogen, mit welchem die Rohmaterialien mit der höheren Konzentration des flüchtigen Bestandteils im ersten Strang des Vorwärmers behandelt werden. Aufgrund der getrennten Aufgabe von Rohmaterialien mit höherer bzw. niedrigerer Konzentration des flüchtigen Bestandteils in den ersten bzw. zweiten Strang des Vorwärmers kann die Abscheidung des flüchtigen Bestandteils aus dem mit dem flüchtigen Bestandteil angereicherten ersten Teilstrom der Abgase besonders effizient gestaltet werden, da nur die Rohmaterialien mit dem hohen Schadstoffanteil für die Abgasreinigung verwendet werden. Nach der Aufbereitung des ersten Rohmaterialstroms mit Hilfe des ersten Teilstroms der Abgase im ersten Strang des Vorwärmers wird der erste Rohmaterialstrom in den zweiten Strang des Vorwärmers gefördert und mit dem zweiten Rohmaterialstrom vereinigt. Die Rohmaterialien werden schließlich gemeinsam in Richtung des Ofens geführt und im Ofen gebrannt. Der erste Strang des Vorwärmers steht hierbei derart mit dem zweiten Strang des Vorwärmers in Verbindung, dass die mit dem ersten Teilstrom der Abgase behandelten und aufbereiteten Rohmaterialien aus dem ersten Strang anschließend mit im Wesentlichen gleichbleibender Temperatur, d.h. ohne Abkühlung des Rohmaterialstroms in einem Zwischenspeicher, mit den Rohmaterialien aus dem zweiten Strang zusammengeführt werden. Die Temperatur des ersten Rohmaterialstroms beträgt hierbei zumindest 250°C, insbesondere zwischen 300°C und 500°C. Vorteilhafterweise kann hiermit die Energieeffizienz gegenüber Ausführungen mit einem getrennten Austreibungsreaktor, bei welchem der für die Schadstoffabscheidung verwendete Rohmaterialstrom vor der Rückführung in den Vorwärmer zwischengelagert und somit abgekühlt wird, wesentlich erhöht werden.

Zur effizienten Abscheidung der flüchtigen Bestandteile aus dem Abgasstrom ist es günstig, wenn der erste Rohmaterialstrom Staub aus der Zementklinkerherstellung enthält. Der in den ersten Strang des Vorwärmers aufgegebene Staub stammt insbesondere von einem Ofenfilter, mit welchem die Abgase vor dem Austritt in die Atmosphäre entstaubt werden. In einem bevorzugten Prozess entsteht in der Rohmühle bei höheren Temperaturen ein großer Staubmassenstrom mit relativ geringer Quecksilberkonzentration und im Ofenfilter ein kleiner Staubmassenstrom mit höherer Quecksilberkonzentration, welcher in den ersten Strang des Vorwärmers aufgegeben wird.

Für die Effizienz des Verfahrens ist es von Vorteil, wenn der erste Rohmaterialstrom einen höheren Anteil von Kohlenstoffverbindungen, Schwefelverbindungen, beispielsweise Pyrit, oder Ammoniumverbindungen als der zweite Rohmaterialstrom enthält.

Bei der Durchführung des erfindungsgemäßen Verfahrens ist bevorzugt vorgesehen, dass der durch den ersten Strang des Vorwärmers geleitete erste Teilstrom der Abgase zuerst entstaubt und danach dessen flüchtiger Bestandteil abgeschieden wird, wobei der aus dem ersten Teilstrom abgeschiedene Staub in den zweiten Strang des Vorwärmers rückgeführt wird. Der erste Teilstrom der Abgase wird hierbei einem Heißgasentstauber zugeführt, welcher mit einer Feststoffbeladung von beispielsweise weniger als 200 g/Nm³ (Gramm pro Normkubikmeter)beaufschlagt wird und das Abgas bis auf Staubgehalte < 1 g/Nm³ reinigt. Dadurch wird vorteilhafterweise der im ersten Strang des Vorwärmers aufgegebene Staub fast vollständig in den Zementherstellungsprozess zurückgeführt.

Die Effizienz der Abscheidung des flüchtigen Bestandteils kann weiter gesteigert werden, wenn der erste Strang des Vorwärmers mit einer geringeren Abgasmenge, vorzugsweise auch mit einer höheren Beladung mit Staub, als der zweite Strang des Vorwärmers betrieben wird. Somit wird im ersten Strang des Vorwärmers eine vergleichsweise hohe Konzentration des flüchtigen Bestandteils in den Abgasen erzeugt, so dass die daran anschließende Abscheidung des flüchtigen Bestandteils aus den Abgasen des ersten Teilstroms besonders effizient durchgeführt werden kann.

Vorzugsweise kann der erste Rohmaterialstrom nacheinander durch zumindest zwei Zyklone des ersten Strangs des Vorwärmers geleitet werden. Der erste Rohmaterialstrom wird hierbei im Gegenstromprinzip mit dem ersten Teilstrom der Abgase erwärmt, wodurch der flüchtige Bestandteil ausgetrieben und anschließend aus dem ersten Teilstrom der Abgase abgeschieden wird, während der erste Rohmaterialstrom in Richtung des Ofens geführt wird.

Zur Erzielung eines konstruktiv einfacheren und daher kostengünstigeren Aufbaus des Vorwärmers ist es von Vorteil, wenn der erste Rohmaterialstrom in ein Steigrohr aufgegeben, dort mit dem ersten Teilstrom der Abgase durchmischt und anschließend in einen Zyklon geführt wird. In Strömungsrichtung der Abgase nach dem Steigrohr wird der erste Teilstrom der Abgase in einen Heißgasentstauber geführt, mit welchem ein weiterer Anteil des ersten Rohmaterialstroms abgeschieden und in den Vorwärmer rückgeführt wird.

Zur Bereitstellung des ersten Teilstroms, aus welchem der flüchtige Bestandteil abgeschieden wird, ist es günstig, wenn der erste Teilstrom der Abgase aus den Abgasen aus dem zweiten Strang des Vorwärmers abgezweigt wird.

Zur Abscheidung von mittel- bis schwerflüchtigen Bestandteilen, insbesondere Quecksilber oder Ammonium, ist es von Vorteil, wenn der erste Teilstrom der Abgase zwischen zwei Zyklonen des zweiten Strangs des Vorwärmers abgezweigt wird, wobei die Abgastemperatur vorzugsweise mehr als 600°C beträgt. Gemäß einer bevorzugten Ausführung weist der zweite Strang des Vorwärmers vier oder fünf Zyklone auf, wobei die Abzweigung des ersten Teilstroms der Abgase vorzugsweise zwischen dem in Strömungsrichtung der Rohmaterialien gesehen zweiten und dritten Zyklon erfolgt.

Zur Abscheidung von leichtflüchtigen Bestandteilen, insbesondere organischen Verbindungen, ist es günstig, wenn der erste Teilstrom der Abgase in Strömungsrichtung der Abgase gesehen unmittelbar vor der Aufgabe für den zweiten Rohmaterialstrom abgezweigt wird, wobei die Abgastemperatur vorzugsweise zwischen 450°C und 500°C beträgt.

Wenn der erste Teilstrom der Abgase bei einer Abgastemperatur von zwischen 750°C und 800°C aus dem zweiten Teilstrom der Abgase abgezweigt wird, können einerseits schwerflüchtige Bestandteile, beispielsweise Schwefelverbindungen, aus dem ersten Rohmaterialstrom effizient ausgetrieben und abgeschieden werden. Darüber hinaus kann die Effizienz der Abgasreinigung erhöht werden, da bei gleicher Abgasmenge im ersten Strang des Vorwärmers ein entsprechend höherer Durchsatz des ersten Rohmaterialstroms erzielbar ist.

Um den Durchsatz des ersten Rohmaterialstroms zu erhöhen und die Energieeffizienz der Abgasreinigung zu verbessern, ist es günstig, wenn ein Anteil des ersten Teilstroms in Strömungsrichtung der Abgase gesehen vor der Abscheidung des flüchtigen Bestandteils in den ersten Strang des Vorwärmers rückgeführt wird. Demnach wird ein Anteil des ersten Teilstroms der Abgase in der Art einer Umluftführung in den ersten Strang des Vorwärmers rezykliert. Vorzugsweise werden zwischen 50 und 90 % der Abgase des ersten Teilstroms in den ersten Strang des Vorwärmers rückgeführt, so dass entsprechend nur zwischen 50 % und 10 % der Abgase des ersten Teilstroms aus dem Vorwärmer abgezogen und zur Abscheidung des flüchtigen Bestandteils herangezogen werden. Von Vorteil ist es, wenn die Temperatur der Abgase des Teilstroms vor der Abscheidung des flüchtigen Bestandteils abgesenkt wird. Die Temperaturabsenkung kann beispielsweise in einem Quench durch Wassereindüsung erfolgen. Die Temperaturabsenkung kann auch gleich mit der Abscheidung des flüchtigen Bestandteils kombiniert sein. Dabei eignen sich Wärmetauscher oder Verdampfungskühler zur Absenkung der Temperatur auf 60°C bis 140°C, vorzugsweise 60°C bis 120°C, besonders. Durch den reduzierten Dampfdruck kann die Abscheidung des Quecksilbers in der zumindest einen Filterstufe erhöht werden.

Gemäß einer ersten bevorzugten Ausführung wird der flüchtige Bestandteil, insbesondere Quecksilber, mit Hilfe eines Schlauchfilters aus den Abgasen des ersten Teilstroms abgeschieden. Durch entsprechende Temperaturabsenkung wird der ursprünglich zum größten Teil gasförmig vorliegende flüchtige Bestandteil kondensiert, so dass die entstandenen Partikel vom Filtermaterial des Schlauchfilters abgeschieden werden können. Die Partikel mit dem darin gebundenen flüchtigen Bestandteil werden in regelmäßigen Abständen aus dem Schlauchfilter ausgetragen und deponiert. Vorzugsweise werden zusätzlich Additive, wie Aktivkohle, eingebracht, um das Quecksilber aus der gasförmigen Phase abzutrennen und aus den Abgasen des ersten Teilstroms abzuscheiden.

Alternativ zum Schlauchfilter kann der flüchtige Bestandteil, insbesondere Quecksilber, mit Hilfe eines Wäschers aus den Abgasen des ersten Teilstroms abgeschieden werden. Als Waschflüssigkeit können insbesondere Metallsulfidlösungen, Kalksteinsuspensionen oder saure Wäscher in Kombination mit organosulfidischen Fällungsmitteln eingesetzt werden, sodass der flüchtige Bestandteil nach einer Behandlung des Abwassers des Wäschers konzentriert wird. Insbesondere, wenn der abgeschiedene flüchtige Bestandteil deponiert werden muss, ist es von Vorteil, wenn dieser durch das Abscheideverfahren entsprechend hoch konzentriert wird.

Alternativ zu den oben beschriebenen Methoden kann der flüchtige Bestandteil, insbesondere Quecksilber, mit Hilfe eines Fest- oder Wanderbettadsorbers aus den Abgasen des ersten Teilstroms abgeschieden werden. Mit einem Wanderbettadsorber sind prinzipiell höhere Abscheidegrade erzielbar und die Ausnutzung der eingesetzten Sorptionsmittel ist höher als bei Flugstromprozessen.

Gemäß einer weiteren alternativen Ausführung kann der flüchtige Bestandteil, insbesondere Ammoniak, mit Hilfe eines selektiv katalytischen Reaktors abgeschieden werden.

Schließlich kann der flüchtige Bestandteil, insbesondere organische Verbindungen, mit Hilfe einer thermischen Nachverbrennung abgeschieden werden.

Die der Erfindung zugrundeliegende Aufgabe wird zudem durch eine Vorrichtung der eingangs angeführten Art gelöst, bei welcher der Vorwärmer einen mit einem ersten Teilstrom der Abgase betreibbaren ersten Strang und einen mit einem zweiten Teilstrom der Abgase betreibbaren zweiten Strang aufweist, wobei der erste Strang des Vorwärmers eine erste Aufgabe für einen ersten Rohmaterialstrom mit einer höheren Konzentration des flüchtigen Bestandteils und der zweite Strang des Vorwärmers eine zweite Aufgabe für einen zweiten Rohmaterialstrom mit einer niedrigeren Konzentration des flüchtigen Bestandteils aufweist, wobei der erste Strang des Vorwärmers mit einer Stufe zur Abscheidung des flüchtigen Bestandteils aus dem ersten Teilstrom der Abgase verbunden ist, wobei zwischen dem ersten und zweiten Strang des Vorwärmers eine Verbindungsleitung angeordnet ist, so dass der durch Wärmeaustausch mit dem ersten Teilstrom der Abgase im ersten Strang des Vorwärmers auf eine Temperatur von zumindest 250°C erwärmte erste Rohmaterialstrom mit im Wesentlichen gleichbleibender Temperatur von zumindest 250°C mit dem zweiten Rohmaterialstrom des zweiten Strangs des Vorwärmers zusammenführbar ist.

Zu den Vorteilen der erfindungsgemäßen Vorrichtung wird auf die obige Beschreibung des Verfahrens verwiesen.

Zur Behandlung von Rohmaterialien mit hoher Konzentration des flüchtigen Bestandteils im ersten Strang des Vorwärmers ist es von Vorteil, wenn die Aufgabe für den ersten Rohmaterialstrom mit einem Staubspeicher zur Speicherung von Staub, vorzugsweise Filterstaub von einem Ofenfilter zum Entstauben der Abgase vor dem Austritt in die Atmosphäre, verbunden ist.

Um den zweiten Strang des Vorwärmers gezielt mit Rohmaterialien niedrigerer Konzentration des flüchtigen Bestandteils zu beaufschlagen, ist es günstig, wenn die Aufgabe für den zweiten Rohmaterialstrom mit einem Rohmehlspeicher zur Speicherung von Rohmehl aus einer Rohmehlmühle verbunden ist.

Die Effizienz der Abgasreinigung kann erheblich gesteigert werden, wenn der Staubspeicher getrennt vom Rohmehlspeicher angeordnet ist. Demnach werden die in Bezug auf die Konzentration des flüchtigen Bestandteils verschiedenen Rohmaterialien voneinander getrennt gelagert bzw. in den zugehörigen Strang des Vorwärmers aufgegeben.

Im Hinblick auf einen energieeffizienten Betrieb ist es von Vorteil, wenn der erste Strang des Vorwärmers einen Heißgasentstauber zur Entstaubung der Abgase des ersten Teilstroms aufweist, welcher Heißgasentstauber über die Leitung zur Rückführung des abgeschiedenen Staubes mit dem zweiten Strang des Vorwärmers verbunden ist.

Zur Konzentrierung des flüchtigen Bestandteils im ersten Teilstrom der Abgase ist es von Vorteil, wenn in Strömungsrichtung der Abgase gesehen vor der Stufe zur Abscheidung des flüchtigen Bestandteils eine Zirkulationsleitung zur Rückführung eines Anteils des ersten Teilstroms der Abgase in den ersten Strang des Vorwärmers vorgesehen ist.

Zum Betrieb des ersten Strangs des Vorwärmers ist bevorzugt zwischen dem ersten und zweiten Strang des Vorwärmers eine Leitung zur Abzweigung des ersten Teilstroms der Abgase vom zweiten Teilstrom der Abgase vorgesehen. Demnach werden die Abgase zum Betrieb des ersten Strangs des Vorwärmers aus dem zweiten Teilstrom der Abgase im zweiten Strang des Vorwärmers gewonnen.

Je nach Art des flüchtigen Bestandteils können verschiedene, im Stand der Technik an sich bekannte Abscheider eingesetzt werden.

Die Stufe zur Abscheidung des flüchtigen Bestandteils im ersten Teilstrom der Abgase kann ein Schlauchfilter aufweisen. Andererseits kann die Stufe zur Abscheidung des flüchtigen Bestandteils im ersten Teilstrom der Abgase einen Wäscher aufweisen. Weitere bevorzugte Ausführungen sehen zur Abscheidung des flüchtigen Bestandteils im ersten Teilstrom der Abgase einen Fest- oder Wanderbettadsorber vor. Zudem kann die Stufe zur Abscheidung des flüchtigen Bestandteils im ersten Teilstrom der Abgase einen selektiv katalytischen Reaktor aufweisen. Schließlich ist es in manchen Anwendungen von Vorteil, wenn die Stufe zur Abscheidung des flüchtigen Bestandteils im ersten Teilstrom der Abgase eine thermische Nachverbrennung aufweist.

Die vorliegende Erfindung wird anhand der beigefügten Zeichnungen näher erläutert.

### Darin zeigen

Fig. 1 ein Blockschaltbild einer Vorrichtung zur Zementklinkerherstellung gemäß dem Stand der Technik;
Fig. 2 ein Blockschaltbild einer erfindungsgemäßen Vorrichtung zur Abscheidung von flüchtigen Bestandteilen bei der Zementklinkerherstellung;
Fig. 3 ein Blockschaltbild einer weiteren Ausführungsform der Vorrichtung zur Abscheidung von flüchtigen Bestandteilen; und
Fig. 4 ein Blockschaltbild eines ersten Vorwärmerstrangs der Vorrichtung gemäß Fig. 3.

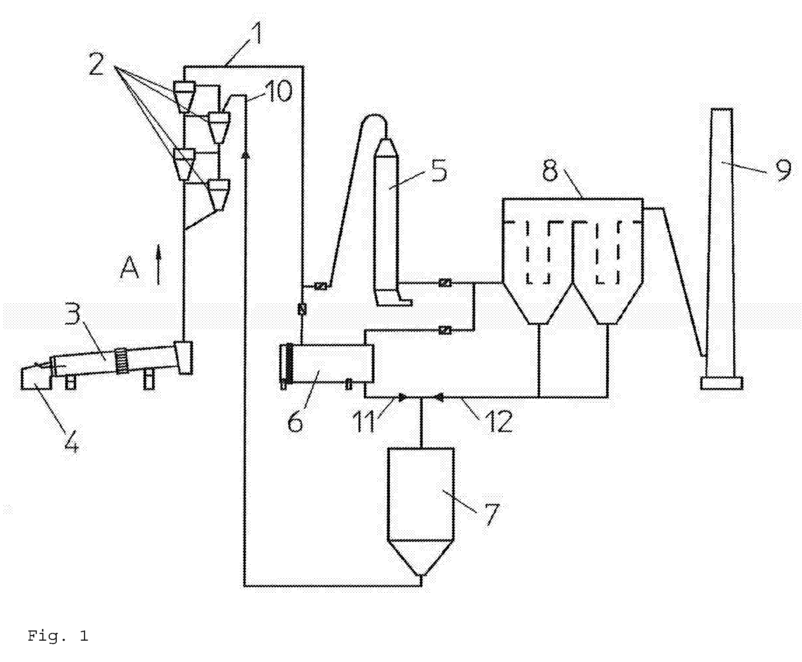

Fig. 1 zeigt ein Blockschaltbild einer Vorrichtung zur Zementklinkerherstellung gemäß dem Stand der Technik. Das für die Zementklinkerherstellung benötigte Rohmaterial 10 wird im Gegenstromprinzip, d.h. gegen die Richtung A der Abgase 1, in einen Vorwärmer 2, welche üblicherweise aus mehreren übereinander angeordneten Zyklonen besteht, aufgegeben. Das entsprechend vorgewärmte Rohmaterial 10 gelangt von dem Vorwärmer 2 in den Drehrohrofen 3, wo das Material zu Zementklinker gebrannt wird. Über eine entsprechende Kühl- und Austragseinrichtung 4 wird der Zementklinker ausgetragen und in entsprechende Silos (nicht dargestellt) gefördert. Vor Austritt der Abgase in die Atmosphäre werden diese zumindest teilweise in einer Rohmehlmühle 6 einer Mahltrocknung zugeführt oder in einer Kühleinrichtung 5, wie zum Beispiel einem Verdampfungskühler, abgekühlt und in einem Ofenfilter 8 entstaubt. Danach gelangen die Abgase 1 über einen Schlot 9 in die Atmosphäre. Der abgeschiedene Staub 12 aus dem Ofenfilter 8 und das gemahlene Rohmaterial 11 aus der Rohmehlmühle 6 werden in einem Silo 7 vermischt und gemeinsam als Rohmaterial 10 in den Vorwärmer 2 aufgegeben. Durch die Art der Gegenstromführung von Material und Abgasstrom wird zwischen der Vorwärmstufe 2 und der Rohmehlmühle 6 bzw. der zumindest einen Filterstufe 8 durch die Materialrückführung ein Kreislauf für das in den Abgasen 1 enthaltene Quecksilber gebildet. Der Quecksilbermassenstrom, welcher im Kreislauf geführt wird, beträgt dabei ein Vielfaches des Quecksilber-Input-Massenstroms aus den frischen Rohmaterialien und Brennstoffen.

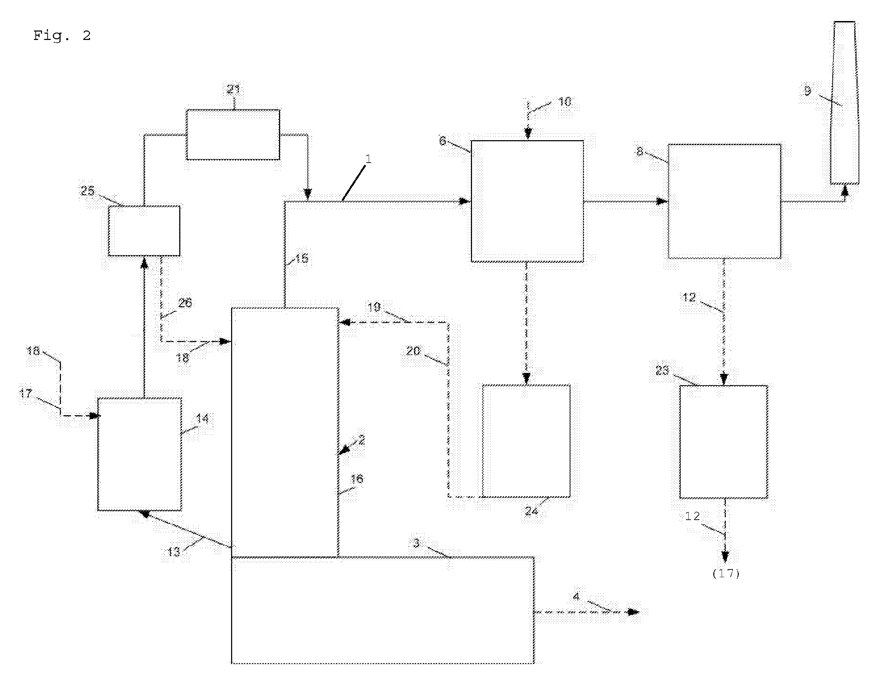

Fig. 2 zeigt das Blockschaltbild einer erfindungsgemäßen Ausführungsform eines Verfahrens bzw. einer Vorrichtung zur Abscheidung des flüchtigen Bestandteils, in der gezeigten Ausführung insbesondere Quecksilber, aus den Abgasen bei der Zementklinkerherstellung. Die Abgasströme sind hierbei mit durchgezogenen Linien und die Materialströme mit strichlierten Linien eingezeichnet.

Wie aus Fig. 2 ersichtlich, weist der Vorwärmer 2 der gezeigten Anlage einen mit einem ersten Teilstrom 13 der Abgase betreibbaren ersten Strang 14 und einen mit einem zweiten Teilstrom 15 der Abgase 1 betreibbaren zweiten Strang 16 auf. Der erste Strang 14 wird über eine Aufgabe 17 mit einem ersten Rohmaterialstrom 18 mit einer höheren Konzentration des flüchtigen Bestandteils beaufschlagt. Der zweite Strang 16 wird über eine Aufgabe 19 mit einem zweiten Rohmaterialstrom 20 beaufschlagt, welcher eine niedrigere Konzentration des flüchtigen Bestandteils aufweist. Die Rohmaterialien für die Zementklinkerherstellung werden unter Wärmeaustausch mit den Abgasen 1 durch den Vorwärmer 2 geleitet und anschließend im Drehrohrofen 3 gebrannt. Durch die Aufwärmung der Rohmaterialien in dem Vorwärmer 2 wird der in den Rohmaterialien gebundene flüchtige Bestandteil verdampft. Hierfür wird der erste Rohmaterialstrom 18 im ersten Strang 14 des Vorwärmers durch die Abgase 1 auf eine Temperatur von zumindest 250°C erwärmt, welche zum Austreiben des Quecksilbers ausreicht.

Wie aus Fig. 2 weiters ersichtlich, ist zwischen dem ersten Strang 14 und zweiten Strang 16 des Vorwärmers 2 eine Verbindungsleitung 26 angeordnet. Der erste Rohmaterialstrom 18 im ersten Strang 14 des Vorwärmers 2, welcher durch den Kontakt mit dem ersten Teilstrom 13 der Abgase 1 eine Temperatur von zumindest 250°C aufweist, wird über die Verbindungsleitung 26 direkt, d.h. ohne Zwischenlagerung, in den zweiten Strang 16 des Vorwärmers 2 gefördert, so dass sich die Temperatur des ersten Rohmaterialstroms 18 beim Transport in den zweiten Strang 16 nicht bzw. nur unwesentlich ändert. Demnach wird der erste Rohmaterialstrom 18 mit im Wesentlichen gleichbleibender Temperatur von zumindest 250°C mit dem zweiten Rohmaterialstrom 20 des zweiten Strangs 16 des Vorwärmers 2 zusammengeführt. Hiermit kann auf eine neuerliche Aufwärmung des ersten Rohmaterialstroms 18, aus welchem der flüchtige Bestandteil abgeschieden wird, verzichtet werden, so dass die Energieeffizienz des Verfahrens erhöht werden kann.

Wie aus Fig. 2 weiters ersichtlich, ist die Aufgabe 17 für den ersten Rohmaterialstrom 18 mit einem Staubspeicher 23 zur Speicherung von Staub verbunden, welcher einen vergleichsweise hohen Anteil des flüchtigen Bestandteils enthält. Der Staubspeicher 23 ist mit dem Ofenfilter 8 zum Entstauben der Abgase vor dem Austritt in die Atmosphäre verbunden. Somit wird der im Ofenfilter 8 anfallende Staub 12 über den Staubspeicher 23 zur Aufgabe 17 geführt, mit welcher der erste Rohmaterialstrom 18 in Form des Staubs 12 in den ersten Strang 14 des Vorwärmers 2 aufgegeben wird. Andererseits ist die Aufgabe 19 für den zweiten Rohmaterialstrom 20 mit einem vom Staubspeicher 23 getrennten Rohmehlspeicher 24 zur Speicherung des Rohmehls verbunden, welches an der Rohmehlmühle 6 aus den Rohmaterialien 10 gewonnen wird. In der gezeigten Anlage wird daher eine Aufteilung der Rohmaterialien in den ersten Rohmaterialstrom 18 mit der höheren Konzentration des flüchtigen Bestandteils und in den zweiten Rohmaterialstrom 20 mit der niedrigeren Konzentration des flüchtigen Bestandteils vorgenommen.

Fig. 3 zeigt ein Blockschema zu einer weiteren Ausführung der erfindungsgemäßen Vorrichtung.

Wie aus Fig. 3 ersichtlich, weist der zweite Strang 16 des Vorwärmers 2 in der gezeigten Ausführung fünf Zyklone 27 auf. Der zweite Rohmaterialstrom 20 (in Fig. 3 mit strichlierten Linien dargestellt) wird im Gegenstromprinzip zum zweiten Teilstrom 15 der Abgase 1 (in Fig. 3 mit durchgezogenen Linien dargestellt) durch die Zyklone 27 des zweiten Strangs 16 geleitet.

Wie aus Fig. 3 weiters ersichtlich, weist der erste Strang 14 des Vorwärmers 2 in der gezeigten Ausführung eine mit der Aufgabe 17 verbundene zweistufige Zyklonkaskade 29, in welchem der erste Rohmaterialstrom 18 mit dem ersten Teilstrom 13 der Abgase 1 durchmischt und anschließend in Richtung eines Heißgasentstaubers 25 geleitet wird, mit welchem die Abgase 1 entstaubt werden. Der Heißgasentstauber 25 ist über die Leitung 26 zur Rückführung des abgeschiedenen Staubes mit dem zweiten Strang 16 des Vorwärmers 2 verbunden.

Wie aus Fig. 3 weiters ersichtlich, ist zwischen dem ersten Stang 14 und zweiten Strang 16 des Vorwärmers 2 zumindest eine Leitung 30 zur Abzweigung des ersten Teilstroms 13 der Abgase 1 aus dem zweiten Teilstrom 15 der Abgase 1 vorgesehen.

In Fig. 3 sind drei verschiedene Leitungen 30', 30", 30"' für die Abzweigung des ersten Teilstroms 13 der Abgase 1 aus dem zweiten Strang 16 des Vorwärmers 2 dargestellt, wobei selbstverständlich auch nur eine der gezeigten Varianten zum Einsatz kommen kann.

Wie aus Fig. 3 ersichtlich, mündet die Leitung 30' zwischen zwei Zyklonen 27 in den zweiten Strang 16 des Vorwärmers 2. Die Abgastemperatur beträgt hierbei im Wesentlichen 600°C.

Andererseits kann der erste Teilstrom 13 der Abgase 1 über die Leitung 30" abgezweigt werden, welche in Strömungsrichtung der Abgase gesehen unmittelbar vor der Aufgabe 19 für den zweiten Rohmaterialstrom 20 in den zweiten Strang 16 des Vorwärmers mündet. Die Abgastemperatur beträgt hierbei zwischen 450°C und 500°C.

Schließlich kann der erste Teilstrom 13 der Abgase 1 bei einer Abgastemperatur von zwischen 750°C und 800°C aus dem zweiten Teilstrom 15 der Abgase 1 abgezweigt werden. Hierfür ist die Leitung 30"' in der gezeigten Ausführung mit dem in Richtung des Materialstroms gesehen fünften Zyklon 27 verbunden. Alternativ kann die Leitung 30"' auch im Bereich eines Kalzinators 31 oder des vierten Zyklons 27 (nicht gezeigt) vom zweiten Strang 16 des Vorwärmers 2 abgehen.

Wie aus Fig. 3 weiters ersichtlich, ist der erste Strang 14 des Vorwärmers 2 mit einer Stufe 21 zur Abscheidung des flüchtigen Bestandteils (oder verschiedener flüchtiger Bestandteile) aus dem ersten Teilstrom 13 der Abgase 1 verbunden, welche beispielsweise ein Schlauchfilter aufweist. Vor der Stufe 21 ist zudem ein Kühler 34 zum Abkühlen des ersten Teilstroms 13 auf eine Temperatur von beispielsweise 120°C angeordnet. Dem ersten Teilstrom 13 werden nach dem Durchströmen des Kühlers 34 anschließend ein Sorptionsmittel 35, beispielsweise Aktivkohle oder Metallsulfidlösungen, zugegeben, bevor der flüchtige Bestandteil in der Abscheidestufe 21 abgeschieden wird. Die an der Abscheidestufe 21 abgeschiedenen Schadstoffe werden über eine Leitung (nicht gezeigt) aus dem System ausgetragen. Somit wird der flüchtige Bestandteil aus dem durch den ersten Strang 14 des Vorwärmers 2 geleiteten ersten Teilstrom 13 der Abgase 1 abgeschieden, welcher zuvor mit dem flüchtigen Bestandteil aus dem ersten Rohmaterialstrom 18 angereichert wurde. Im ersten Teilstrom 13 der Abgase 1 sind die flüchtigen Bestandteile in hohen Konzentrationen enthalten, wodurch die Effizienz der Abgasreinigung in der daran anschließenden Stufe 21 wesentlich gesteigert werden kann. Zur weiteren Effizienzsteigerung wird der erste Strang 14 des Vorwärmers 2 mit einer geringeren Abgasmenge als der zweite Strang 16 des Vorwärmers betrieben. Darüber hinaus wird der erste Teilstrom 13 der Abgase 1 in Strömungsrichtung nach der Stufe 21 zur Abscheidung des flüchtigen Bestandteils über eine Leitung 33 mit dem zweiten Teilstrom 15 der Abgase zusammengeführt. Die Abgase 1 können anschließend der Rohmehlmühle 6 zugeführt werden. Im Direktbetrieb werden die Abgase 1 nach der Zusammenführung der Teilströme 13, 15 über eine Leitung 33' direkt dem Ofenfilter 8 zugeführt.

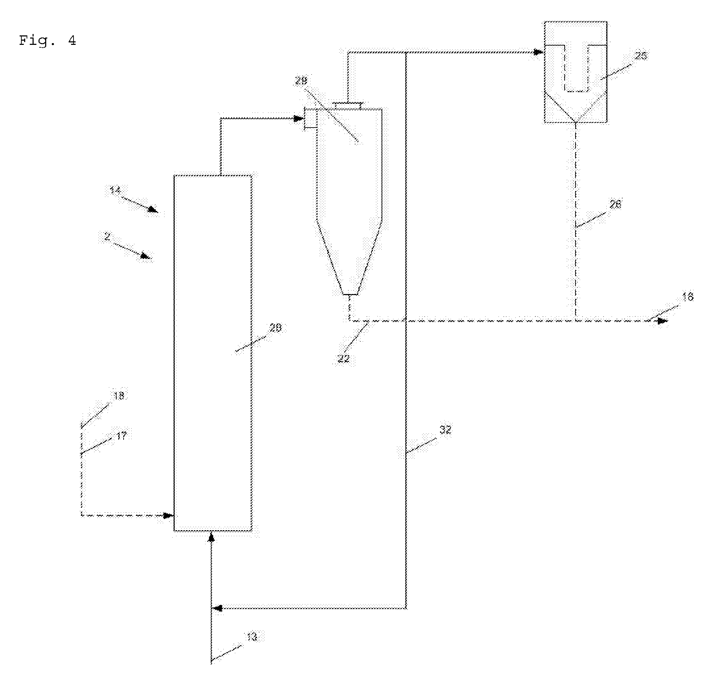

Fig. 4 zeigt eine bevorzugte Ausführung der Vorrichtung, bei welcher ein Anteil des ersten Teilstroms 13 zwischen dem ersten Strang 14 des Vorwärmers 2 und dem Heißgasentstauber 25 in den ersten Strang 14 des Vorwärmers 2 rückgeführt wird. Hierfür ist eine Zirkulationsleitung 32 vorgesehen, mit welcher ein Anteil des ersten Teilstroms 13 der Abgase 1 in Strömungsrichtung nach dem Zyklon 29 abgezweigt und in Strömungsrichtung vor dem Steigrohr 28 in den ersten Strang 14 des Vorwärmers 2 rezykliert wird. Demnach zirkuliert ein Anteil des ersten Teilstroms 13 der Abgase 1 im ersten Strang 14 des Vorwärmers 2, während der übrige Anteil des ersten Teilstroms 13 zur Stufe 21 geleitet wird, mit welcher der flüchtige Bestandteil abgeschieden wird.

## Patentansprüche

1. Verfahren zur Abscheidung zumindest eines flüchtigen Bestandteils, beispielsweise Quecksilber, Thallium, organische Verbindungen, Schwefel- oder Stickstoffverbindungen, aus den Abgasen (1) bei der Zementklinkerherstellung, wobei die Rohmaterialien (10) für die Zementklinkerherstellung unter Wärmeaustausch mit den Abgasen (1) durch einen Vorwärmer (2) geleitet und anschließend in einem Drehrohrofen (3) gebrannt werden, wobei durch die Aufwärmung der Rohmaterialien (10) in dem Vorwärmer (2) der in den Rohmaterialien (10) gebundene flüchtige Bestandteil verdampft wird, welcher aus den Abgasen (1) abgeschieden wird, **dadurch gekennzeichnet, dass** ein erster Rohmaterialstrom (18) mit einer höheren Konzentration des flüchtigen Bestandteils in einen ersten Strang (14) des Vorwärmers (2) und ein zweiter Rohmaterialstrom (20) mit einer niedrigeren Konzentration des flüchtigen Bestandteils in einen zweiten Strang (16) des Vorwärmers (2) aufgegeben werden, wobei der erste Strang (14) des Vorwärmers (2) mit einem ersten Teilstrom (13) der Abgase (1) des Drehrohrofens (3) und der zweite Strang (16) des Vorwärmers (2) mit einem zweiten Teilstrom (15) der Abgase (1) des Drehrohrofens (3) betrieben werden, wobei der flüchtige Bestandteil aus dem durch den ersten Strang (14) des Vorwärmers (2) geleiteten ersten Teilstrom (13) der Abgase (1) abgeschieden wird, wobei der durch Wärmeaustausch mit dem ersten Teilstrom (13) der Abgase (1) im ersten Strang (14) des Vorwärmers (2) auf eine Temperatur von zumindest 250°C erwärmte erste Rohmaterialstrom (18) mit im Wesentlichen gleichbleibender Temperatur von zumindest 250°C über eine Verbindungsleitung (26) zwischen dem ersten (14) und zweiten Strang (16) des Vorwärmers (2) mit dem zweiten Rohmaterialstrom (20) des zweiten Strangs (16) des Vorwärmers (2) zusammengeführt wird.

2. Verfahren nach Anspruch 1, **dadurch gekennzeichnet, dass** der erste Rohmaterialstrom (18) Staub aus der Zementklinkerherstellung enthältoder dass der erste Rohmaterialstrom (18) einen höheren Anteil von Kohlenstoffverbindungen, Schwefelverbindungen, beispielsweise Pyrit, oder Ammoniumverbindungen als der zweite Rohmaterialstrom (20) enthält.

3. Verfahren nach Anspruch 1 oder 2, **dadurch gekennzeichnet, dass** der durch den ersten Strang (14) des Vorwärmers (2) geleitete erste Teilstrom (13) der Abgase (1) zuerst entstaubt und danach dessen flüchtiger Bestandteil abgeschieden wird, wobei der aus dem ersten Teilstrom (13) abgeschiedene Staub in den zweiten Strang (16) des Vorwärmers (2) rückgeführt wird.

4. Verfahren nach einem der Ansprüche 1 bis 3, **dadurch gekennzeichnet, dass** der erste Strang (14) des Vorwärmers (2) mit einer geringeren Abgasmenge, vorzugsweise auch mit einer höheren Beladung mit Staub, als der zweite Strang (16) des Vorwärmers (2) betrieben wird.

5. Verfahren nach einem der Ansprüche 1 bis 4, **dadurch gekennzeichnet, dass** der erste Rohmaterialstrom (18) nacheinander durch zumindest zwei Zyklone (29) des ersten Strangs (14) des Vorwärmers (2) geleitet wird oder dass der erste Rohmaterialstrom (18) in ein Steigrohr (28) aufgegeben, dort mit dem ersten Teilstrom (13) der Abgase (1) durchmischt und anschließend in einen Zyklon (29) geführt wird.

6. Verfahren nach einem der Ansprüche 1 bis 5, **dadurch gekennzeichnet, dass** der erste Teilstrom (13) der Abgase (1) aus den Abgasen (1) aus dem zweiten Strang (16) des Vorwärmers (2) abgezweigt wird, wobei der erste Teilstrom (13) der Abgase (1) vorzugsweise zwischen zwei Zyklonen (27) des zweiten Strangs (16) des Vorwärmers (2) abgezweigt wird, wobei die Abgastemperatur vorzugsweise mehr als 600°C beträgt, oder dass der erste Teilstrom (13) der Abgase (1) in Strömungsrichtung der Abgase (1) gesehen unmittelbar vor der Aufgabe (19) für den zweiten Rohmaterialstrom (20) abgezweigt wird, wobei die Abgastemperatur vorzugsweise zwischen 450°C und 500°C beträgt, oder dass der erste Teilstrom (13) der Abgase (1) bei einer Abgastemperatur von zwischen 750°C und 800°C aus dem zweiten Teilstrom (15) der Abgase (1) abgezweigt wird.

7. Verfahren nach einem der Ansprüche 1 bis 6, **dadurch gekennzeichnet, dass** ein Anteil des ersten Teilstroms (13) in Strömungsrichtung der Abgase (1) gesehen vor der Abscheidung des flüchtigen Bestandteils in den ersten Strang (14) des Vorwärmers (2) rückgeführt wird.

8. Verfahren nach einem der Ansprüche 1 bis 7, **dadurch gekennzeichnet, dass** die Temperatur der Abgase des ersten Teilstroms (13) vor der Abscheidung des flüchtigen Bestandteils abgesenkt wird.

9. Verfahren nach einem der Ansprüche 1 bis 8, **dadurch gekennzeichnet, dass** der flüchtige Bestandteil, insbesondere Quecksilber, mit Hilfe eines Schlauchfilters oder mit Hilfe eines Wäschers oder mit Hilfe eines Fest- oder Wanderbettadsorbers aus den Abgasen (1) des ersten Teilstroms (13) abgeschieden wirdoder dass der flüchtige Bestandteil, insbesondere Ammoniak, mit Hilfe eines selektiv katalytischen Reaktors abgeschieden wird oder dass der flüchtige Bestandteil, insbesondere organische Verbindungen, mit Hilfe einer thermischen Nachverbrennung abgeschieden wird.

10. Vorrichtung zur Abscheidung zumindest eines flüchtigen Bestandteils, beispielsweise Quecksilber, Thallium, organische Verbindungen, Schwefel- oder Stickstoffverbindungen, aus den Abgasen (1) bei der Zementklinkerherstellung, mit einem Vorwärmer (2), einer Aufgabe für die zur Zementklinkerherstellung benötigten Rohmaterialien im Gegenstromprinzip gegen die Richtung der Abgase (1) in den Vorwärmer (2), und mit einem Drehrohrofen (3) zum Brennen der Rohmaterialien (10), **dadurch gekennzeichnet, dass** der Vorwärmer (2) einen mit einem ersten Teilstrom (13) der Abgase (1) betreibbaren ersten Strang (14) und einen mit einem zweiten Teilstrom (15) der Abgase (1) betreibbaren zweiten Strang (16) aufweist, wobei der erste Strang (14) des Vorwärmers (2) eine erste Aufgabe (17) für einen ersten Rohmaterialstrom (18) mit einer höheren Konzentration des flüchtigen Bestandteils und der zweite Strang (16) des Vorwärmers (2) eine zweite Aufgabe (19) für einen zweiten Rohmaterialstrom (20) mit einer niedrigeren Konzentration des flüchtigen Bestandteils aufweist, wobei der erste Strang (14) des Vorwärmers (2) mit einer Stufe (21) zur Abscheidung des flüchtigen Bestandteils aus dem ersten Teilstrom (13) der Abgase (1) verbunden ist, wobei zwischen dem ersten und zweiten Strang (14, 16) des Vorwärmers (2) eine Verbindungsleitung (26) angeordnet ist, so dass der durch Wärmeaustausch mit dem ersten Teilstrom (13) der Abgase (1) im ersten Strang (14) des Vorwärmers (2) auf eine Temperatur von zumindest 250°C erwärmte erste Rohmaterialstrom (18) mit im Wesentlichen gleichbleibender Temperatur von zumindest 250°C mit dem zweiten Rohmaterialstrom (20) des zweiten Strangs (16) des Vorwärmers (2) zusammenführbar ist.

11. Vorrichtung nach Anspruch 10, **dadurch gekennzeichnet, dass** die Aufgabe (17) für den ersten Rohmaterialstrom (18) mit einem Staubspeicher (23) zur Speicherung von Staub, vorzugsweise Filterstaub von einem Ofenfilter (8) zum Entstauben der Abgase (1) vor dem Austritt in die Atmosphäre, verbunden istund/oder dass die Aufgabe (19) für den zweiten Rohmaterialstrom (20) mit einem Rohmehlspeicher (24) zur Speicherung von Rohmehl aus einer Rohmehlmühle (6) verbunden ist, wobei der Staubspeicher (23) vorzugsweise getrennt vom Rohmehlspeicher (24) angeordnet ist.

12. Vorrichtung nach Anspruch 10 oder 11, **dadurch gekennzeichnet, dass** der erste Strang (14) des Vorwärmers (2) einen Heißgasentstauber (25) zur Entstaubung der Abgase (1) des ersten Teilstroms (13) aufweist, welcher Heißgasentstauber (25) über die Leitung (26) zur Rückführung des abgeschiedenen Staubes mit dem zweiten Strang (16) des Vorwärmers (2) verbunden ist.

13. Vorrichtung nach einem der Ansprüche 10 bis 12, **dadurch gekennzeichnet, dass** in Strömungsrichtung der Abgase (1) gesehen vor der Stufe (21) zur Abscheidung des flüchtigen Bestandteils eine Zirkulationsleitung zur Rückführung eines Anteils des ersten Teilstroms (13) der Abgase (1) in den ersten Strang (14) des Vorwärmers (2) vorgesehen ist.

14. Vorrichtung nach einem der Ansprüche 10 bis 13, **dadurch gekennzeichnet, dass** zwischen dem ersten und zweiten Strang (14, 16) des Vorwärmers (2) eine Leitung (30) zur Abzweigung des ersten Teilstroms (13) der Abgase (1) vom zweiten Teilstrom (15) der Abgase (1) vorgesehen ist.

15. Vorrichtung nach einem der Ansprüche 10 bis 14, **dadurch gekennzeichnet, dass** die Stufe (21) zur Abscheidung des flüchtigen Bestandteils im ersten Teilstrom (13) der Abgase (1) ein Schlauchfilter oder einen Wäscher oder einen Fest- oder Wanderbettadsorber oder einen selektiv katalytischen Reaktor oder eine eine thermische Nachverbrennung aufweist.

## Claims

1. A process for separating off at least one volatile component, for example mercury, thallium, organic compounds, sulphur or nitrogen compounds, from the off-gases (1) in cement clinker production, wherein the raw materials (10) for cement clinker production are passed through a preheater (2) with heat exchange with the off-gases (1) and are then burnt in a rotary kiln (3), wherein, owing to the heating of the raw materials (10) in the preheater (2), the volatile component bound in the raw materials (10) is vaporised and separated off from the off-gases (1), **characterised in that** a first raw material stream (18) having a higher concentration of the volatile component is fed into a first line (14) of the preheater (2) and a second raw material stream (20) having a lower concentration of the volatile component is fed into a second line (16) of the preheater (2), wherein the first line (14) of the preheater (2) is operated with a first substream (13) of the off-gases (1) of the rotary kiln (3) and the second line (16) of the preheater (2) is operated with a second substream (15) of the off-gases (1) of the rotary kiln (3), wherein the volatile component is separated off from the first substream (13) of the off-gases (1) passed through the first line (14) of the preheater (2), wherein the first raw material stream (18) heated to a temperature of at least 250°C by heat exchange with the first substream (13) of the off-gases (1) in the first line (14) of the preheater (2) is combined, at an essentially constant temperature of at least 250°C, via a connecting line (26) between the first (14) and second line (16) of the preheater (2) with the second raw material stream (20) of the second line (16) of the preheater (2).

2. The process according to claim 1, **characterised in that** the first raw material stream (18) contains dust from cement clinker production or that the first raw material stream (18) contains a higher proportion of carbon compounds, sulphur compounds, for example pyrite, or ammonium compounds than the second raw material stream (20).

3. The process according to claim 1 or 2, **characterised in that** the first substream (13) of the off-gases (1) passed through the first line (14) of the preheater (2) is first dedusted and thereafter its volatile component is separated off, wherein the dust separated off from the first substream (13) is returned into the second line (16) of the preheater (2).

4. The process according to any one of claims 1 to 3, **characterised in that** the first line (14) of the preheater (2) is operated with a smaller off-gas quantity, preferably also with a higher loading with dust, than the second line (16) of the preheater (2).

5. The process according to any one of claims 1 to 4, **characterised in that** the first raw material stream (18) is passed successively through at least two cyclones (29) of the first line (14) of the preheater (2) or that the first raw material stream (18) is fed into an ascending pipe (28), is mixed there with the first substream (13) of the off-gases (1) and is then fed into a cyclone (29).

6. The process according to any one of claims 1 to 5, **characterised in that** the first substream (13) of the off-gases (1) is branched off from the off-gases (1) of the second line (16) of the preheater (2), wherein the first substream (13) of the off-gases (1) is branched off preferably between two cyclones (27) of the second line (16) of the preheater (2), wherein the off-gas temperature preferably amounts to more than 600°C, or that the first substream (13) of the off-gases (1) is branched off, viewed in the flow direction of the off-gases (1), directly before the feed (19) for the second raw material stream (20), wherein the off-gas temperature preferably amounts to between 450°C and 500°C, or that the first substream (13) of the off-gases (1) is branched off at an off-gas temperature of between 750°C and 800°C from the second substream (15) of the off-gases (1).

7. The process according to any one of claims 1 to 6, **characterised in that** a proportion of the first substream (13) is fed back before the separating-off of the volatile component, as viewed in the flow direction of the off-gases (1), into the first line (14) of the preheater (2).

8. The process according to any one of claims 1 to 7, **characterised in that** the temperature of the off-gases of the first substream (13) is reduced before the separating-off of the volatile component.

9. The process according to any one of claims 1 to 8, **characterised in that** the volatile component, in particular mercury, is separated off with the aid of a bag filter or with the aid of a scrubber or with the aid of a fixed-bed or moving-bed adsorber from the off-gases (1) of the first substream (13), or that the volatile component, in particular ammonia, is separated off with the aid of a selective catalytic reactor, or that the volatile component, in particular organic compounds, is separated off with the aid of a thermal after-burning facility.

10. A device for separating off at least one volatile component, for example mercury, thallium, organic compounds, sulphur or nitrogen compounds, from the off-gases (1) in cement clinker production, with a preheater (2), a feed for the raw materials required for cement clinker production in the counter-flow principle against the direction of the off-gases (1) into the preheater (2), and with a rotary kiln (3) for burning the raw materials (10), **characterised in that** the preheater (2) comprises a first line (14) that can be operated with a first substream (13) of off-gases (1) and a second line (16) that can be operated with a second substream (15) of off-gases (1), wherein the first line (14) of the preheater (2) comprises a first feed (17) for a first raw material stream (18) having a higher concentration of the volatile component and the second line (16) of the preheater (2) comprises a second feed (19) for a second raw material stream (20) having a lower concentration of the volatile component, wherein the first line (14) of the preheater (2) is connected to a stage (21) for separating off the volatile component from the first substream (13) of the off-gases (1), wherein a connecting line (26) is disposed between the first and second line (14, 16) of the preheater (2), so that the first raw material stream (18) heated to a temperature of at least 250°C by heat exchange with the first substream (13) of the off-gases (1) in the first line (14) of the preheater (2) can be combined, at an essentially constant temperature of at least 250°C, with the second raw material stream (20) of the second line (16) of the preheater (2).

11. The device according to claim 10, **characterised in that** the feed (17) for the first raw material stream (18) is connected to a dust storage unit (23) for storing dust, preferably filter dust from a kiln filter (8) for dedusting the off-gases (1) before exit into the atmosphere, and/or the feed (19) for the second raw material stream (20) is connected to a raw meal storage unit (24) for storing raw meal from a raw meal mill (6), wherein the dust storage unit (23) is preferably disposed separate from the raw meal storage unit (24).

12. The device according to claim 10 or 11, **characterised in that** the first line (14) of the preheater (2) comprises a hot gas dust extractor (25) for dedusting the off-gases (1) of the first substream (13), which hot gas dust extractor (25) is connected to the second line (16) of the preheater (2) via the line (26) returning the separated-off dust.

13. The device according to any one of claims 10 to 12, **characterised in that** a circulation line for returning a proportion of the first substream (13) of the off-gases (1) into the first line (14) of the preheater (2) is provided, viewed in the flow direction of the off-gases (1), before the stage (21) for separating off the volatile component.

14. The device according to any one of claims 10 to 13, **characterised in that** a line (30) for branching off the first substream (13) of the off-gases (1) from the second substream (15) of the off-gases (1) is provided between the first and second line (14, 16) of the preheater (2).

15. The device according to any one of claims 10 to 14, **characterised in that** the stage (21) for separating off the volatile component in the first substream (13) of the off-gases (1) comprises a bag filter or a scrubber or a fixed-bed or moving-bed adsorber or a selective catalytic reactor or a thermal after-burning facility.

## Revendications

1. Procédé pour séparer au moins un constituant volatil, par exemple du mercure, du thallium, des composés organiques, des composés sulfurés ou azotés, à partir d'effluents gazeux (1) de la fabrication de clinkers de ciment, dans lequel les matières premières (10) destinées à la fabrication du clinker de ciment sont, avec échange de chaleur avec les effluents gazeux (1), envoyées dans un préchauffeur (2), puis sont brûlées dans un four tubulaire rotatif (3), le constituant volatil lié dans les matières première (10) étant soumis à une évaporation sous l'effet du chauffage des matières premières (10) dans le préchauffeur (2), constituant qui est séparé des effluents gazeux (1), **caractérisé en ce qu'**un premier courant de matières premières (18), ayant une teneur élevée en le constituant volatil, est envoyé dans un premier tronçon (14) du préchauffeur (2), et un deuxième courant de matières premières (20), ayant une faible teneur en le constituant volatil, est envoyé dans un deuxième tronçon (16) du préchauffeur (2), le premier tronçon (14) du préchauffeur (2) étant exploité avec un premier courant partiel (13) des effluents gazeux (1) du four tubulaire rotatif (3) et le deuxième tronçon (16) du préchauffeur (2) étant exploité avec un deuxième courant partiel (15) des effluents gazeux (1) du four tubulaire rotatif (3), le constituant volatil étant séparé du premier courant partiel (13) des effluents gazeux (1), passant par le premier tronçon (14) du préchauffeur (2), le premier courant de matières premières (18), chauffé à une température d'au moins 250°C sous l'effet de l'échange de chaleur avec le premier courant partiel (13) des effluents gazeux (1) dans le premier tronçon (14) du préchauffeur (2), étant réuni, pour l'essentiel à une température constante d'au moins 250°C, par l'intermédiaire d'une conduite de liaison (26) entre le premier (14) et le deuxième tronçon (16) du préchauffeur (2), au deuxième courant de matières premières (20) du deuxième tronçon (16) du préchauffeur (2).

2. Procédé selon la revendication 1, **caractérisé en ce que** le premier courant de matières premières (18) contient des poussières de la fabrication de clinkers de ciment, ou que le premier courant de matières premières (18) contient une proportion de composés du carbone, de composés du soufre, par exemple la pyrite, ou de composés de l'ammonium, plus grande que le deuxième courant de matières premières (20).

3. Procédé selon la revendication 1 ou 2, **caractérisé en ce que** le premier courant partiel (13) des effluents gazeux (1), passant par le premier tronçon (14) du préchauffeur (2), est d'abord dépoussiéré, puis son constituant volatil est séparé, ce à l'occasion de quoi les poussières séparées du premier courant partiel (13) sont renvoyées dans le deuxième tronçon (16) du préchauffeur (2).

4. Procédé selon l'une des revendications 1 à 3, **caractérisé en ce que** le premier tronçon (14) du préchauffeur (2) est exploité avec une quantité d'effluents gazeux plus faible, de préférence aussi avec une charge de poussières plus élevée, que le deuxième tronçon (16) du préchauffeur (2).

5. Procédé selon l'une des revendications 1 à 4, **caractérisé en ce que** le premier courant de matières premières (18) est envoyé successivement à travers au moins deux cyclones (29) du premier tronçon (14) du préchauffeur (2), ou que le premier courant de matières premières (18) est introduit dans une conduite montante (28), y est intimement mélangé avec le courant partiel (13) des effluents gazeux (1), puis est envoyé dans un cyclone (29).

6. Procédé selon l'une des revendications 1 à 5, **caractérisé en ce que** le premier courant partiel (13) des effluents gazeux (1) est dérivé des effluents gazeux (1) sortant du deuxième tronçon (16) du préchauffeur (2), le premier courant partiel (13) des effluents gazeux (1) étant dérivé de préférence entre deux cyclones (27) du deuxième tronçon (16) du préchauffeur (2), la température des effluents gazeux étant de préférence supérieure à 600°C, ou que le premier courant partiel (13) des effluents gazeux (1) est, quand on regarde dans la direction de l'écoulement des effluents gazeux (1), dérivé immédiatement avant le point d'introduction (19) du deuxième courant de matières premières (20), la température des effluents gazeux étant de préférence comprise entre 450°C et 500°C, ou que le premier courant partiel (13) des effluents gazeux (1) est dérivé du deuxième courant partiel (15) des effluents gazeux (1) à une température des effluents gazeux comprise entre 750°C et 800°C.

7. Procédé selon l'une des revendications 1 à 6, **caractérisé en ce qu'**une partie du premier courant partiel (13) est, quand on regarde dans la direction de l'écoulement des effluents gazeux (1), renvoyée, avant séparation du constituant volatil, dans le premier tronçon (14) du préchauffeur (2).

8. Procédé selon l'une des revendications 1 à 7, **caractérisé en ce que** la température des effluents gazeux du premier courant partiel (13) est abaissée avant séparation du constituant volatil.

9. Procédé selon l'une des revendications 1 à 8, **caractérisé en ce que** le constituant volatil, en particulier le mercure, est, à l'aide d'un filtre à manches, ou à l'aide d'un laveur, ou à l'aide d'un adsorbeur à lit fixe ou à lit mobile, séparé des effluents gazeux (1) du premier courant partiel (13), ou que le constituant volatil, en particulier l'ammoniac, est séparé à l'aide d'un réacteur catalytique sélectif, ou que le constituant volatil, en particulier les composés organiques, est séparé à l'aide d'une postcombustion thermique.

10. Dispositif pour séparer au moins un constituant volatil, par exemple le mercure, le thallium, les composés organiques, les composés sulfurés ou azotés, à partir des effluents gazeux de la fabrication de clinkers de ciment, comprenant un préchauffeur (2), un point d'introduction des matières premières nécessaires à la fabrication des clinkers de ciment, par utilisation du principe du contre-courant par rapport à la direction des effluents gazeux (1) pénétrant dans le préchauffeur (2), et un four tubulaire rotatif (3) pour brûler les matières premières (10), **caractérisé en ce que** le préchauffeur (2) comprend un premier tronçon (14), pouvant être exploité avec un premier courant partiel (13) des effluents gazeux (1) et un deuxième tronçon (16) pouvant être exploité avec un deuxième courant partiel (15) des effluents gazeux (1), le premier tronçon (14) du préchauffeur (2) comprenant un premier point d'introduction (17) d'un premier courant de matières premières (18) ayant une teneur élevée en le constituant volatil, et le deuxième tronçon (16) du préchauffeur (2) présentant un deuxième point d'introduction (19) d'un deuxième courant de matières premières (20) ayant une faible teneur en le constituant volatil, le premier tronçon (14) du préchauffeur (2) étant relié à un étage (21) destiné à séparer le constituant volatil du premier courant partiel (13) des effluents gazeux (1), une conduite de liaison (26) étant disposée entre le premier et le deuxième tronçons (14, 16) du préchauffeur (2), de telle sorte que le premier courant de matières premières (18), chauffé à une température d'au moins 250°C avec échange de chaleur avec le premier courant partiel (13) des effluents gazeux (1) dans le premier tronçon (14) du préchauffeur (2) puisse être réuni, pour l'essentiel à une température constante d'au moins 250°C, au deuxième courant de matières premières (20) du deuxième tronçon (16) du préchauffeur (2).

11. Dispositif selon la revendication 10, **caractérisé en ce que** le point d'introduction (17) du premier courant de matières premières (18) est relié à un accumulateur de poussières (23) destiné à accumuler les poussières, en particulier les poussières de filtration provenant d'un filtre (8) du four, pour dépoussiérer les effluents gazeux (1) avant leur sortie dans l'atmosphère, et/ou que le point d'introduction (19) du deuxième courant de matières premières (20) est relié à un accumulateur de farine brute (14), pour accumuler la farine brute provenant d'un broyeur de farine brute (6), l'accumulateur de poussières (23) étant de préférence disposé séparément de l'accumulateur de farine brute (24).

12. Dispositif selon la revendication 10 ou 11, **caractérisé en ce que** le premier tronçon (14) du préchauffeur (2) comprend un dépoussiéreur (25) de gaz chaud pour dépoussiérer les effluents gazeux (1) du premier courant partiel (13), lequel dépoussiéreur (25) de gaz chaud étant, par l'intermédiaire de la conduite (26) destiné au renvoi des poussières séparées, relié au deuxième tronçon (16) du préchauffeur (2).

13. Dispositif selon l'une des revendications 10 à 12, **caractérisé en ce que**, quand on regarde dans la direction de l'écoulement des effluents gazeux (1), une conduite de circulation, destinée au renvoi d'une partie du premier courant partiel (13) des effluents gazeux (1) dans le premier tronçon (14) du préchauffeur (2), est prévue avant l'étage (21) destiné à la séparation du constituant volatil.

14. Dispositif selon l'une des revendications 10 à 13, **caractérisé en ce qu'**une conduite (30) destinée à dériver du deuxième courant partiel (15) des effluents gazeux (1) le premier courant partiel (13) des effluents gazeux (1) est prévue entre le premier et le deuxième tronçons (14, 16) du préchauffeur (2).

15. Dispositif selon l'une des revendications 10 à 14, **caractérisé en ce que** l'étage (21) destiné à séparer le constituant volatil dans le premier courant partiel (13) des effluents gazeux (1) comprend un filtre à manches ou un laveur ou un adsorbeur à lit fixe ou à lit mobile ou un réacteur catalytique sélectif ou une postcombustion thermique.
